(19) Europäisches Patentamt
European Patent Office
Office européen des brevets

(11) **EP 1 245 931 A1**

(12) **EUROPÄISCHE PATENTANMELDUNG**

(43) Veröffentlichungstag:
**02.10.2002 Patentblatt 2002/40**

(51) Int Cl.⁷: **G01D 5/244**, G01D 5/249, G01D 18/00

(21) Anmeldenummer: **01108218.7**

(22) Anmeldetag: **31.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Leica Geosystems AG**
**9435 Heerbrugg (CH)**

(72) Erfinder: **Weilenmann, Jürg, Dr.**
**9443 Widnau (DE)**

(74) Vertreter: **Kaminski, Susanne et al**
**Büchel, Kaminski & Partner**
**Austrasse 79**
**9490 Vaduz (LI)**

(54) **Verfahren zur Kalibrierung eines Messinstrumentes**

(57) Ein Verfahren und eine Vorrichtung zur Kalibrierung eines Messinstrumentes mit mindestens zwei gegeneinander beweglichen Teilsystemen (*K*;*M*) und mit Mitteln zur Erzeugung einer Abbildung mindestens eines ersten Teilsystems (K) auf mindestens eine detektierende Komponente (*A*) wenigstens eines Teilsystems, bei denen nach dem Erstellen eines mathematischen Modells ein Parametersatz, der Einflussfaktoren auf systematische Messfehler des Messinstrumentes quantifiziert, mit mindestens einem Parameter aus dem mathematischen Modell abgeleitet wird.

Darauf erfolgt die Abbildung von die relative Lage eines Teilsystems bestimmenden Strukturelementen (*S*) eines ersten Teilsystems (*K*) auf einem zweiten Teilsystem (*M*), ein Umwandeln der Abbildung der Strukturelemente (*S*) des ersten Teilsystems (*K*) in Signale durch die detektierende Komponente (*A*), und ein Aufnehmen mindestens eines Signalvektors.

Aus den geschätzten Werten des Parametersatzes werden Korrekturwerte, die systematische Messfehler des Messinstrumentes reduzieren, abgeleitet und bereitgestellt.

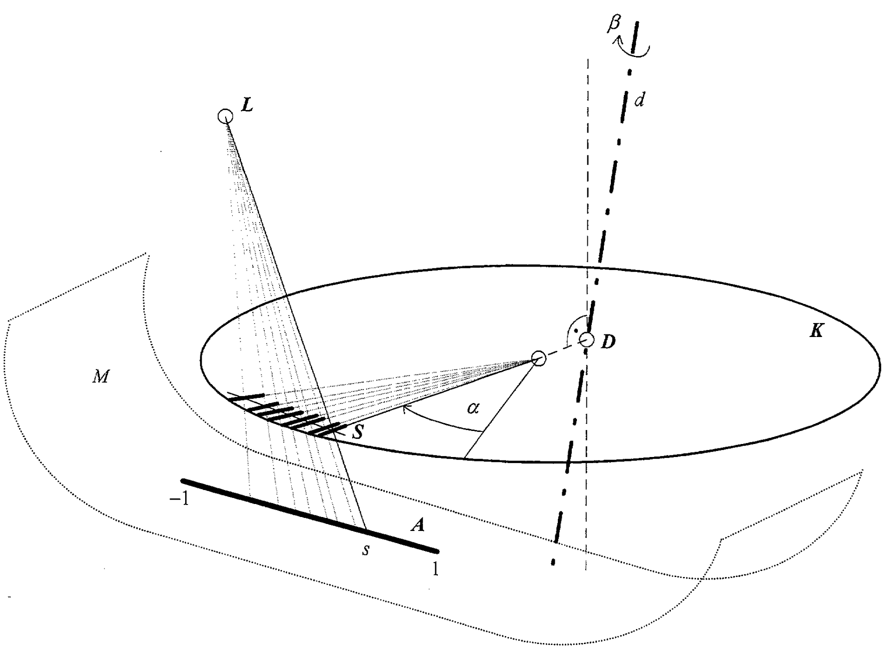


Fig. 1



Printed by Jouve, 75001 PARIS (FR)

## Beschreibung

Die Erfindung betrifft ein Verfahren zur Kalibrierung eines Messinstrumentes nach dem Oberbegriff des Anspruchs 1, sowie ein mit diesem Verfahren kalibrierbares Messinstrument nach dem Oberbegriff des Anspruchs 9, eine dafür geeignete Kalibriervorrichtung nach dem Oberbegriff des Anspruchs 18, eine Verwendung des Verfahrens nach dem Oberbegriff des Anspruchs 28, ein Computerprogramm-Produkt nach Anspruch 29 und ein Computer-Daten-Signal nach Anspruch 30.

Primäres Gütemerkmal von Sensoren oder Messinstrumenten ist die Verteilung der Fehler, mit denen die von ihnen erzeugten Messwerte behaftet sind: Typischerweise wird verlangt, dass die Messfehler mit einer spezifizierten Wahrscheinlichkeit oder aber ihr Mittelwert und ihre Standardabweichung innerhalb spezifizierter Schranken liegen. Es kann technisch oder ökonomisch vorteilhaft sein, bei der Fertigung von Messinstrumenten die Genauigkeitsvorgaben zu ignorieren und anschliessend die damit bewusst in Kauf genommenen systematischen Messfehler mittels eines geeigneten Verfahrens - nachfolgend *Kalibrierung* genannt - zu ermitteln und rechnerisch oder durch Nachstellungen des Messinstrumentes soweit zu reduzieren, dass bei nachfolgenden Messungen die Genauigkeitsvorgaben erfüllt sind.

Der Stand der Technik der Kalibrierung von Messinstrumenten, beispielsweise von Winkelmessern des in der CH 658 514 A5 beschriebenen Typs, besteht darin, mit dem noch nicht kalibrierten Instrument eine Anzahl bekannter Messlagen - nachfolgend *Referenzlagen* genannt - zu messen und die Differenzen zwischen gemessenen und Referenzlagen als Messfehler an den gemessenen Stellen zu deklarieren und diese mittels eines ihre dominanten Anteile beschreibenden mathematischen Modells über den gesamten Messbereich des Messinstrumentes zu interpolieren und numerisch so aufzubereiten und zu speichern, dass sie bei allen nachfolgenden Messungen rechnerisch kompensiert werden können, wobei die apparative Korrektur des Messinstrumentes mittels dafür vorgesehener Verstellvorrichtungen grundsätzlich eine Alternative darstellt. Charakteristisches Merkmal der Kalibrierung des Stands der Technik ist ihre Abstützung auf externe Messmittel (zur Messung der Referenzlagen).

Aus dem Einsatz externer Messmittel zur Kalibrierung von Messinstrumenten ergeben sich zwei Schwierigkeiten, eine grundsätzliche und eine technische. Gemeinsame Ursache beider Schwierigkeiten ist der Sachverhalt, dass auch die Kenntnis der Referenzlagen unvollkommen ist: Fehlerhafte Messungen werden aufgrund anderer fehlerhafter Messungen "korrigiert". Dies kann nur bewerkstelligt werden, indem die Differenzen zwischen den zwei Messungen in einen Instrumentenfehler und einen Referenzfehler aufgeteilt werden. Dem gegenwärtigen Stand der Technik entsprechend erfolgt diese Aufteilung auf der Basis eines statistischen Schätzverfahrens, das seinerseits auf statistischen Annahmen betreffend die Korrelation der Fehler der beiden Messungen gründet. Glaubwürdigkeit und Zuverlässigkeit dieser Annahmen können nur durch weitere Messungen etabliert werden, wodurch sich ein weiteres Kalibrierungsproblem einstellt. Die so beginnende, prinzipiell endlose Kaskade von Kalibrierungendie erwähnte grundsätzliche Schwierigkeit - wird praktisch dadurch beendet, dass dafür gesorgt wird, dass die Genauigkeit der Kenntnis der Referenzlagen viel höher ist als die vom kalibrierten Messinstrument geforderte Messgenauigkeit. Daraus resultiert die technische Schwierigkeit, dass für jedes zu kalibrierende Messinstrument ein genaueres Messverfahren für die Referenzlagen bereitgestellt werden muss, was beispielsweise bei Winkelmessungen mit Winkel-Messgenauigkeiten im Sub-Winkelsekunden-Bereich technisch aufwendig und damit unwirtschaftlich wird. Zudem müssen Kalibrierungsverfahren des Stands der Technik aufgrund der technischen Anforderungen an die Referenzlagen meist beim Hersteller durchgeführt werden, was eine ständige Kalibrierung des Messinstrumentes zwecks Kompensation von Umwelteinflüssen, Abnutzungs- und Alterungsvorgängen erschwert.

Die dem gegenwärtigen Stand der Technik inhärenten Probleme können nur gelöst werden, indem ihre Ursache beseitigt wird, d.h. die Kalibrierung ohne Einsatz externer Messmittel erfolgt.

Gegenstand dieser Erfindung ist ein derartiges Kalibrierungsverfahren - fortan *Selbstkalibrierung* genanntfür mechanische Messinstrumente mit mindestens zwei gegeneinander beweglichen Teilsystemen aus meist starren Körpern, wie sie beispielsweise in Winkelsensoren des in CH 658 514 A5 beschriebenen Typs realisiert sind, sowie ein zur Durchführung des Verfahrens vorgesehenes Messinstrument, eine Kalibriervorrichtung, die Verwendung des Verfahrens zur Kalibrierung mehrerer Messinstrumente, ein Computerprogramm-Produkt und ein Computer-Daten-Signal.

Die technische Aufgabe der Erfindung besteht darin, ein Verfahren und geeignete Vorrichtungen bereitzustellen, mit denen eine Kalibrierung ohne die prinzipiellen, von Vergleichsmessungen herrührenden Fehler durchgeführt werden kann. Diese Aufgabe wird durch den grundsätzlichen Verzicht auf externe Referenzlagen als sog. *Selbstkalibrierung,* ggf. aber unter Einbeziehung externer Referenzlagen als sog. *hybride Kalibrierung,* gelöst.

Eine weitere technische Aufgabe besteht in der Möglichkeit einer Überprüfung der Tauglichkeit der Selbstkalibrierung.

Eine weitere technische Aufgabe der Erfindung besteht in der Erzeugung eines Messwertes mit dem kalibrierten Messinstrument. Sie wird gelöst, indem mittels eines den Messvorgang beschreibenden Modells, das auch der Kalibrierung zugrundegelegt wird, der Messwert als Schätzwert berechnet wird.

Eine weitere technische Aufgabe der Erfindung besteht in der permanenten Selbstkalibrierung. Die erfindungsgemässe Lösung beinhaltet die Einbeziehung weiterer Parameter (als nur der Messwerte) in den Schätzprozess, insbesondere solche, die Umwelteinwirkungen wie beispielsweise Temperatureinflüsse und Alterungsprozesse auf die Messgenauigkeit quantifizieren. Damit liesse sich eine - auf Mehrfachmessinstrumente ausdehnbare - permanente Selbstkalibrierung realisieren, die evtl. eine umwelt- oder alterungsbedingte Verschlechterung der Messgenauigkeit aufhalten würde.

Diese Aufgaben werden erfindungsgemäss durch die kennzeichnenden Merkmale der Ansprüche 1, 9, 18, 28, 29 bzw. 30 gelöst. Vorteilhafte und alternative Ausgestaltungen und Weiterbildungen des Verfahrens, des Messinstrumentes und der Kalibriervorrichtung ergeben sich aus den Merkmalen der Unteransprüche.

Beim erfindungsgemässen Verfahren zur Kalibrierung eines Messinstrumentes mit mindestens zwei gegeneinander beweglichen Teilsystemen und mit Mitteln zur Erzeugung einer Abbildung mindestens eines ersten Teilsystems auf mindestens eine detektierende Komponente wenigstens eines Teilsystems wird in einem ersten Schritt ein die relative Lage der Teilsysteme zueinander und mindestens eine Abbildung beschreibendes mathematisches Modell erstellt. Dabei können grundsätzlich alle den Messvorgang beeinflussenden Parameter, wie z.B. Lage-, Form- oder Strukturparameter der Teilsysteme sowie Parameter der Abbildung oder der Mittel zur Erzeugung der Abbildung, in der Modellierung verwendet werden. Beispielsweise können die räumlichen Lagen einer Lichtquelle und eines lichtempfindlichen Detektors als Parameter ins Modell Eingang finden.

Die gegeneinander beweglichen Teilsysteme, bei denen es sich meist um starre Körper handelt, die aber beispielsweise auch fluide bzw. deformierbare Medien darstellen können, werden in diesem Modell hinsichtlich der für den Messprozess relevanten Merkmalen ihrer relative Lage und ihrer physikalischen Eigenschaften beschrieben. Die Teilsysteme können z.B. translatorisch oder rotatorisch gegeneinander bewegbar sein, oder eine Flüssigkeitsoberfläche kann eine gegenüber einem anderen Teilsystem veränderbare Neigung aufweisen. Beispielsweise kann ein erstes Teilsystem auf eine Flüssigkeitsoberfläche als zweites Teilsystem abgebildet werden. Von dieser erfolgt wiederum eine Abbildung auf ein drittes Teilsystem. Die Abbildung auf das dritte Teilsystem kann als Funktion der Lage der beispielsweise reflektierend gewählten Flüssigkeitsoberfläche beschrieben werden. Die Freiheitsgrade der relativen Bewegung der Teilsysteme des Messinstruments werden durch Zwangsbedingungen, wie z.B. einer Rotation eines Teilsystems gegenüber den anderen Teilsystemen um eine starre Achse, eingeschränkt.

Je nach Ausgestaltung des Messinstrumentes können im mathematischen Modell Strukturelemente beschreibende Parameter, wie z.B. die Lage einzelner Markierungen, Lageparameter der Teilsysteme und Abbildungsparameter miteinander verknüpft sein. Die zur Modellformulierung gewählten Parameter müssen nicht notwendigerweise eine geometrische, physikalische oder statistische Bedeutung haben. Oft ist es zweckdienlich, das ursprüngliche mathematische Modell durch Reparametrisierung in eine strukturell einfachere Form überzuführen und auf eine unmittelbare Interpretierbarkeit der neuen Parameter zu verzichten.

Im nächsten Schritt erfolgt eine Abbildung von Strukturelementen mindestens eines ersten Teilsystems, welche die relative Lage des Teilsystems bestimmen, auf dem zweiten Teilsystem derart, dass die Abbildung eine Information über die relative Lage der beiden Teilsysteme zueinander beinhaltet. Die Strukturelemente können beispielsweise die spezifische äussere Form des ersten Teilsystems oder eine auf dem ersten Teilsystem angebrachten Markierung darstellen. Die Gestaltung der Abbildung dieser Strukturelemente muss so gewählt werden, dass in ihr hinreichende Informationen zur Bestimmung der relativen Lage der Teilsysteme enthalten sind, wobei insbesondere die Grösse des Ausschnitts aus den Strukturelementen entscheidend ist, der zur eindeutigen Lokalisierung der Lage benötigt wird.

Im folgenden Schritt erfolgt durch die detektierende Komponente ein Umwandeln der Abbildung der Strukturelemente des ersten Teilsystems in Signale, aus denen in einem weiteren Schritt mindestens ein Signalvektor mit wenigstens einer Komponente aufgenommen wird, der Informationen über die relative Lage der Teilsysteme enthält. Die Aufnahme des Signalvektors wird unten genauer erläutert.

In einem weiteren Schritt werden die "stochastischen Modellfehler", oft auch "Rauschen" genannt, d.h. die zufallsgesteuerte Diskrepanz zwischen Realität und Modell als Zufallsgrössen modelliert, und über deren Wahrscheinlichkeitsverteilungen werden Annahmen getroffen, die ihrerseits wiederum unbekannte Parameter enthalten können. Aus dem mindestens einen Signalvektor, der modellmässig mit den unbekannten Parametern verknüpft ist, werden unter Anwendung der statistischen Schätztheorie die Parameter so geschätzt, dass ein Gütekriterium optimiert wird. Weitverbreitete Gütekriterien sind maximale Wahrscheinlichkeitsdichte des Rauschens (Maximum Likelihood Schätzung) oder minimale Schätzfehlervarianz.

Statistische Parameterschätzverfahren produzieren nebst Schätzwerten für die Modellparameter zwangsläufig auch Schätzwerte für das Rauschen, die sog. *Residuen.* Modellgemäss sind sie Realisierungen der Zufallsgrössen, die ins mathematische Modell Eingang gefunden haben. Mittels statistischer Tests kann nun a posteriori die Hypothese überprüft werden, ob sie tatsächlich Realisierungen von Zufallsgrössen mit den postulierten statistischen Eigenschaften sind. Derartige sog. "*Residuenanalysen*" können wichtige Hinweise betreffend die Tauglichkeit bzw. Verbesserungswürdigkeit des zur Kalibrierung verwendeten mathematischen Modells liefern.

Im letzten Schritt werden Korrekturwerte, die Messfehler des Messinstrumentes reduzieren sollen, aus den geschätzten Parameterwerten abgeleitet und bereitgestellt. Dies kann durch eine Speicherung der einer jeweiligen Lage zugeordneten Korrekturwerte geschehen, wobei eine rechnerische Korrektur während des Messvorgangs erfolgt. Grundsätzlich können die Korrekturwerte bei Vorliegen entsprechender technischer Verstelleinrichtungen auch in apparative Korrekturen umgesetzt werden.

Einzelne oder mehrere Schritte des Verfahrens können ein- oder mehrfach wiederholt werden. In einer Ausführungsform des Verfahrens werden nach dem Erstellen des mathematischen Modells für ein Messinstrument und dem Ableiten von mindestens einem Parametersatz die folgenden Schritte des Erzeugens von Abbildungen, deren Umwandlung in Signale und die Aufnahme von Signalvektoren mehrfach aufeinanderfolgend wiederholt. Die Zahl der Wiederholungen hängt dabei von der beabsichtigten Güte der Schätzung der Werte des Parametersatzes ab, die statistischen Gesetzmässigkeiten gehorcht.

Nach Beendigung dieser Schritte erfolgt das Schätzen der Werte und das Ableiten und Bereitstellen von Korrekturwerten. In einer anderen, rekursiven Variante des Verfahrens werden nach jedem Erzeugen einer Abbildung und den nachfolgenden Schritten erneut die Werte des Parametersatzes geschätzt.

Eine andere Ausführungsform des Verfahrens verwendet ein mathematisches Modell mit dazu gehörendem mindestens einen Parametersatz für Kalibriervorgänge mehrerer Messinstrumente gleichen Typs, so dass die ersten beiden Verfahrensschritte nur beim Kalibrieren des ersten Messinstrumentes einer ganzen Reihe durchgeführt werden und die weiteren Messinstrumente unter Verwendung dieses Modells und des mindestens einen Parametersatzes kalibriert werden können.

Vorrichtungsseitig können die verwendeten Mittel zur Abbildung beispielsweise aus mindestens einer elektromagnetischen Strahlungsquelle bestehen, wobei vorzugsweise Licht im sichtbaren Spektralbereich verwendet wird. Aufgrund der speziellen technischen Erfordernisse des zu kalibrierenden Messinstrumentes kann es insbesondere notwendig sein, den Strahlengang im Messinstrument mit abbildenden oder Wellenfront strukturierenden optischen Elementen zu beeinflussen oder eine mehrfache Reflexion zur Verlängerung des Strahlengangs zu bewirken. Dabei kann die Abbildung mehrfach zwischen den Teilsystemen hin- und hergespiegelt werden oder aber es kann eine konsekutive Abbildung der Teilsysteme aufeinander erfolgen.

Bei der Erzeugung einer Abbildung werden Strukturelemente eines Teilsystems auf einem zweiten Teilsystem so abgebildet, dass die Abbildung eine Information über die zugehörige relative Lage der Teilsysteme beinhaltet. Entscheidend ist hierbei, dass aus der Abbildung die relative Lage eindeutig bestimmt werden kann. Dabei stehen der abgebildete Anteil des ersten Teilsystems und dessen Strukturelemente, insbesondere deren Dichte und Unterscheidbarkeit, in einem Zusammenhang. Beispielsweise kann eines der Teilsysteme in seiner Form so gestaltet werden, dass ein hinreichend grosser abgebildeter Teil für eine Bestimmung der relativen Lage genügt. Dies ist beispielsweise durch einen speziell gestalteten Verlauf der Kontur des Teilsystems mit ortsabhängigen geometrischen Parametern möglich, im Falle einer um eine Achse rotierenden Scheibe kann etwa der Abstand des Scheibenrands von der Achse als eindeutige Funktion des Winkels bezüglich einer Null-Lage gestaltet werden. Meist wird eine Variation der Form eines Teilsystems aber mit unerwünschten physikalischen Effekten verbunden sein, so dass alternativ auch Strukturelemente in Form einer Markierung aufgebracht werden können. Diese kann beispielsweise durch eine Codierung mit einer Folge von alternierend lichtdurchlässigen und lichtundurchlässigen Codestrichen oder von Codestrichen mit alternierend unterschiedlichem Reflexionsvermögen erfolgen. Aus einem auf der detektierenden Komponente abgebildeten Segment des Codes muss dann eindeutig die relative Lage der Teilsysteme bestimmt werden können.

Um unerwünschte physikalische Effekte, wie z.B. Deviationsmomente, zu vermeiden, kann, insbesondere bei rotatorischen Bewegungen der Teilsysteme gegeneinander, ein Teilsystem mit rotationssymmetrischer Form, z.B. als Kugel, Zylinder, Scheibe oder Ring, ausgebildet werden. Eine Codierung kann dann beispielsweise auf einem glatten Abschnitt des Körpers oder auch in einer Fläche im Inneren eines transluzenten Körpers angebracht werden.

Die detektierende Komponente und alle folgenden Mittel zum Aufnehmen mindestens eines Signalvektors aus den Signalen der detektierenden Komponente, zum Ableiten und Bereitstellen von Korrekturwerten und zum Reduzieren von systematischen Messfehlern des Messinstrumentes können Bestandteile analoger und/oder digitaler Elektronik enthalten und jeweils nach dem Stand der Technik mit Mitteln der Signal- und Informationsverarbeitung gestaltet werden.

In ihrer technischen Ausgestaltung richtet sich die detektierende Komponente nach den Erfordernissen, die durch die Mittel zur Abbildung vorgegeben werden. Bei einer exemplarischen Verwendung sichtbaren Lichtes können grundsätzlich alle möglichen Formen lichtempfindlicher Sensoren, beispielsweise Photo-Multiplier, lichtempfindliche Dioden oder CCD-Kameras, verwendet werden.

Die Mittel zum Aufnehmen mindestens eines Signalvektors aus den Signalen der detektierenden Komponente müssen deren technischen Erfordernissen genügen. Beispielsweise können sie einen Analog-Digital-Wandler (ADC) und mindestens einen Prozessor zur Verarbeitung der Signale und zu deren Umwandlung in einen Signalvektor aufweisen.

In den Mitteln zum Ableiten und Bereitstellen von Korrekturwerten ist der Verfahrensschritt des Schätzens

von Werten des Parametersatzes aus dem mindestens einen Signalvektor implementiert. Er wird vorzugsweise mittels mindestens einem elektronischen Rechner und ergänzenden Speicherbausteinen realisiert.

Die Mittel zum Reduzieren von systematischen Messfehlern des Messinstrumentes können eine rein rechnerische Korrektur der erhaltenen Messwerte, beispielsweise durch einen elektronischen Rechner, ermöglichen oder aber Vorrichtungen zur mechanischen oder elektronischen Korrektur beinhalten, z.B. mechanische Feintriebe, piezoelektrische Stellelemente oder eine elektronische Korrektur von Aufnahmefehlern der detektierenden Komponente.

Das erfindungsgemässe Verfahren und ein erfindungsgemässes Messinstrument bzw. eine erfindungsgemässe Kalibriervorrichtung werden am Beispiel der Kalibrierung eines Winkelmessinstrumentes - hier Winkelsensor genanntbeschrieben, das anhand von in der Zeichnung schematisch dargestellten Ausführungsbeispielen rein beispielhaft näher erläutert wird.

Figur 1 zeigt die geometrischen Verhältnisse des beschriebenen Winkelsensors.

Dieser besteht aus einem hier nur teilweise skizzierten Sensorgehäuse als zweitem Teilsystem ***M,*** das im folgenden durch die Lichtquelle *L,* den Array ***A*** als detektierende Komponente und die Drehachse ***d*** dargestellt wird, und einer gegenüber diesem um die Drehachse ***d*** frei drehbaren Scheibefortan *Kreis* genannt - als erstem Teilsystem. Die Lichtquelle ***L*** als Mittel zur Abbildung bildet ein Segment eines auf dem Kreis radial angeordneten Strichcodes Σ, bestehend aus einer Folge von alternierend lichtdurchlässigen und lichtundurchlässigen Codestrichen als Strukturelemente ***S*** auf dem Array ***A*** lichtempfindlicher Dioden, beispielsweise einen CCD-Array, als detektierende Komponente im Schattenwurf ab. Die Lage eines spezifischen Strukturelementes auf dem Kreis wird durch dessen Lagewinkel α gegenüber einer willkürlich gewählten Null-Lage be-schrieben. Die Lage der Abbildung eines spezifischen Strukturelementes ***S*** auf dem Array ***A*** wird durch die Ab-bildungskoordinate ***s*** beschrieben. Die Lage des Kreises bezüglich des Sensorgehäuses wird durch den *Kreis-Lagewinkel* $\beta \in [0,2\pi[$ charakterisiert, um den der Kreis aus einer willkürlich definierten Null-Lage um die mit ihm starr verbundene Drehachse ***d*** gedreht werden muss, um seine aktuelle Lage einzunehmen.

Aufgabe des Winkelsensors ist es, aus der vom Array ***A*** abgetasteten und A/D-gewandelten Intensitätsverteilung des einfallenden Lichtes - fortan *Sensorsignal* genannt - einen Schätzwert β für den *Kreis-Lagewinkel* β zu bilden und als Messresultat auszugeben, der spezifizierte Genauigkeitsvorgaben für den *Messfehler* β-β erfüllt.

Kalibrierungsbedarf entsteht dann, wenn die systematischen Anteile der Messfehler die Einhaltung der Genauigkeitsvorgaben verhindern. Systematische Fehler sind die Folge ungenügender quantitativer Kenntnis der Einflussfaktoren, welche nebst dem Kreis-Lagewinkel β zur Bildung des Sensorsignals beitragen. Falls es also gelingt, aus Sensorsignalen zusätzlich zu den unbekannten Kreis-Lagewinkeln auch diese Einflussfaktoren genauer zu bestimmen, kann der Winkelsensor ohne externe Referenzwinkel durch eine Selbstkalibrierung die Genauigkeitsanforderungen erreichen.

Die Merkmale des Winkelsensors, welche wesentlich zur Signalgestaltung beitragen, müssen explizit benannt und die Mechanismen ihrer Einflussnahme auf das Sensorsignal freigelegt werden. Dies geschieht mittels eines mathematischen Modells des Winkelsensors, welches den Kreis-Lagewinkel quantitativ mit dem Sensorsignal verknüpft und in das diese Einflussfaktoren als *Modellparameter* Eingang finden, deren Anzahl aus praktischen Gründen endlich gehalten werden muss. So wird die Winkelsensor-Kalibrierung auf die Schätzung der Modellparameter aus Sensorsignalen zurückgeführt, also auf ein klassisches Parameterschätzproblem der mathematischen Statistik. Die Selbstkalibrierung unterscheidet sich somit von der Kalibrierung mittels Referenzwinkel dadurch, dass sie externe Messmittel durch die interne "optimale" Anpassung eines Sensormodells an die Sensorsignale ersetzt. Beide Kalibrierungsverfahren lassen sich mühelos zu einer *hybriden Kalibrierung* verbinden.

Das mathematische Modell des Winkelsensors ist das Fundament der Selbstkalibrierung. Ein Weg zur Formulierung eines solchen Modells geht beispielsweise von der idealisierenden Vorstellung aus, die Lichtquelle *L* sei punktförmig, die Codestriche von Σ seien radial in der Ebene *K* des Kreises angeordnet, die Dioden des Arrays *A*seien linear angeordnet und der Kreis bzw. der Strichcode Σ sei starr mit der Drehachse *d* verbunden, die idealer- aber nicht notwendigerweise senkrecht zur Ebene *K* des Kreises stehe. Die räumliche Anordnung von *L, d,* dem Durchstosspunkt von *d* durch *K* - fortan *Kreis-Drehzentrum D* genannt - und *A* wird als starr, d.h. zeitlich invariant, und als so ausgelegt angenommen, dass für jeden Kreis-Lagewinkel β ein zusammenhängendes Segment von Σ auf *A* abgebildet wird.

Die modellgemäss starren relativen Lagen von *L, d, D* und *A* bzw. von Σ*, D* und *d* können nach allgemein bekannten Prinzipien der analytischen Geometrie und unter Verwendung trigonometrischer Funktionen mit 7 bzw. 4 reellen Parametern beschrieben werden, und die relative Lage dieser "Starrkörper" ist durch den Kreis-Lagewinkel $\beta \in [0,2\pi[$ charakterisiert.

In Termen dieser 11 modellgemäss zeitinvarianten Lageparameter und des Kreis-Lagewinkels β kann nach allgemein bekannten Rechenregeln der dreidimensionalen Vektoralgebra, der elementaren Algebra und der elementaren Trigonometrie berechnet werden, wo ein spezifisches Strukturelement *S* des Strichcodes Σ, etwa eine Kante eines Codestriches, das durch den Lagewinkel $\alpha \in [0,2\pi[$ gekennzeichnet ist, den es mit einer willkürlich gewählten Null-Lage in *K* einschliesst, auf den Array *A* abgebildet wird. Die Position dieses Abbildes auf dem Array *A* kann durch eine dimensionslose Abbildungskoordinate $s \in [-1,1]$ beschrieben werden, wobei -1 das eine, 0 den Mittelpunkt und

+1 das andere Ende des Arrays *A* kennzeichnet. Die Null-Lagen der in der Ebene *K* des Kreises gemessenen Lagewinkel $\alpha$ und der in der Normalebene zu *d* gemessenen Kreis-Lagewinkel $\beta$ können so aufeinander abgestimmt werden, dass in der Gleichung, welche die Abbildungskoordinate *s* als Funktion der Winkel $\alpha$ und $\beta$ und der 11 zeitinvarianten Lageparameter darstellt, der Kreis-Lagewinkel $\beta$ nur in der Differenz $\alpha$-$\beta$ auftritt.

Zudem kann diese Gleichung formal vereinfacht werden, indem die in ihr auftretenden funktionalen Verknüpfungen der 11 Lageparameter zu neuen, *dimensionsfreien zeitinvarianten Modellparametern* zusammengefasst werden. Schliesslich zeigt ein Vergleich der individuellen Einflüsse dieser neuen Modellparameter auf *s,* welche dieser Einflüsse zwecks Komplexitätsreduktion mit geringstem Modellfehler ignoriert werden können, und dass mit $k < 11$ zeitinvarianten Modellparametern auszukommen ist.

Eine zweckdienliche Wahl ist $k = 6$, in welchem Fall die erwähnte Gleichung in die Form

$$(0) \qquad s = \hbar(\alpha,\beta;p,q,u,v,x,y) := \frac{\sin(\alpha-\beta)+u\cdot\cos\alpha+v\cdot\sin\alpha}{p\cdot\cos(\alpha-\beta)+q\cdot\sin(\alpha-\beta)+x\cdot\cos\alpha+y\cdot\sin\alpha}$$

gebracht werden kann, wobei *p,q,u,v,x,y* die 6 dimensionslosen zeitinvarianten Modellparameter bezeichnen und die Winkel $\alpha,\beta\in[0,2\pi[$ die oben erklärte Bedeutung haben. Falls die Drehachse *d* senkrecht zur Ebene *K* des Kreises steht ist $x = y = 0$, und falls das Kreis-Drehzentrum *D* mit dem Zentrum des Strichcodes $\Sigma$ zusammenfällt, ist $u = v = 0$; eine weitere sinnvolle Wahl ist deshalb auch $k = 4$ und $x = y = 0$.

Von fundamentaler Bedeutung - sowohl für die Selbstkalibrierung als auch für die Winkelmessung - ist der Sachverhalt, dass Gleichung (0) in allen praktisch relevanten Fällen nach jedem Argument von $\hbar$ eindeutig auflösbar ist, wobei im Falle der Auflösungen nach $\alpha$ und nach $\beta$ zweckdienliche Einschränkungen zu machen sind. Es ist hilfreich, die Lösung von Gleichung (0) nach dem *j*-ten Argument von $\hbar$ als Funktion $\hbar_j^{-1}$ aller involvierten Variablen aufzufassen. So bezeichne $\hbar_1^{-1}(s,\beta;p,q,u,v,x,y)$ die eindeutige Lösung von (0) nach dem 1. Argument $\alpha$ von $\hbar$ im Intervall

$$\left]\beta-\frac{\pi}{2},\beta+\frac{\pi}{2}\right[,$$

, $\hbar_2^{-1}(\alpha,s;p,q,u,v,x,y)$ die eindeutige Lösung von (0) nach dem 2. Argument $\beta$ von $\hbar$ im Intervall

$$\left]\alpha-\frac{\pi}{2},\alpha+\frac{\pi}{2}\right[,$$

etc.

Die Auflösung von Gleichung (0) nach den Argumenten 1 und 3-8 erfolgt mühelos unter Anwendung allgemein bekannter Rechenregeln der elementaren Algebra und der elementaren Trigonometrie, und die Lösung von (0) nach dem 2. Argument ist

$$(1) \qquad \hbar_2^{-1}(\alpha,s;p,q,u,v,x,y) = \alpha - \arctan\left(\frac{z-z'\cdot\sqrt{1-z'^2+z^2}}{1-z'^2}\right),$$

$$z = \frac{p\cdot s}{1-q\cdot s}$$

$$z' = \frac{(u-x\cdot s)\cdot\cos\alpha+(v-y\cdot s)\cdot\sin\alpha'}{1-q\cdot s}$$

sofern die Ungleichung $|z'| <1$ erfüllt ist, was in allen Fällen von praktischem Interesse zutrifft.

Basis der Winkelmessung ist die eindeutige Lösung (1) der Gleichung (0) nach dem Kreis-Lagewinkel $\beta$ : Falls die Modellparameter *p,q,u,v,x,*y bekannt sind und es gelingt, das durch den Lagewinkel $\alpha$ gekennzeichnete Strukturelement *S* des Strichcodes $\Sigma$ seinem Abbild *s* auf dem Array *A* zuzuordnen, so kann der Kreis-Lagewinkel $\beta$ gemäss

(1) berechnet werden. Es ist daher notwendig, den Strichcode Σ *decodierbar* zu gestalten, d.h. die Codestriche dergestalt anzuordnen, dass für jedes $\beta \in [0,2\pi[$ aus dem Bild des von der Lichtquelle *L* auf den Array *A* projizierten Codesegmentes dieses Codesegment auf dem Kreis eindeutig lokalisiert werden kann.

Es gibt viele Möglichkeiten, Σ decodierbar zu gestalten. Eine bekannte Art verwendet eine sog. m-Sequenz der Länge $m = 2^\ell-1$, $\ell$ eine natürliche Zahl, d.h. eine zyklische Binärfolge *b*, bestehend aus $\frac{m-1}{2}$ Nullen und $\frac{m+1}{2}$ Einsen, welche die Eigenschaft hat, dass zu jeder natürlichen Zahl $n < m$ genau eine Teilfolge von *b* bestehend aus $\ell$ aufeinanderfolgenden Ziffern existiert, welche *n* binär darstellt: Wähle zwei verschiedene Winkel $\alpha^0,\alpha^1 > 0$ so, dass $\frac{m-1}{2}\cdot\alpha^0 + \frac{m+1}{2}\cdot\alpha^1 = 2\pi$ ist, wähle einen Winkel $0< \alpha_0^+ <\min\{\alpha^0,\alpha^1\}$, definiere die Winkel $\alpha_i^\mp \in [0,2\pi[$ rekursiv gemäss $\alpha_0^- := 0$ und $\alpha_i^\mp := \alpha_{i-1}^\mp + \alpha^{b(i)}$ für $0 < i < m$, und setze

$$\Sigma(\alpha) := \begin{cases} 1\text{, falls } \alpha_i^- \le \alpha \le \alpha_i^+ \text{ für ein } i \in [0,m[ \\ 0\text{, andernfalls} \end{cases} \quad , \quad \alpha \in [0,2\pi[ . \tag{2}$$

Dieser Strichcode Σ, wobei 1 'lichtdurchlässig' und 0 'lichtundurchlässig' symbolisieren, ist eine physische Realisierung der Binärfolge *b*, deren sektorielles Abbild auf *A* bei günstiger Wahl von $\ell$ und den Winkeln $\alpha^0$ und $\alpha_0^+$ deutlich zu erkennen ist, was Σ decodierbar macht.

Die Parametrisierung (2) von Σ durch die $2m$-1 Winkel $\alpha^0, \alpha_0^+, \alpha_1^\mp, \cdots, \alpha_{m-1}^\mp$ ist nicht die ökonomischste - Σ ist durch $\ell$, das Bildungsgesetz der Binärfolge *b* und die Winkel $\alpha^0$ und $\alpha_0^+$ vollständig spezifiziert - aber zweckmässig für die Kalibrierung. Die vom Winkelsensor erreichbare Messgenauigkeit hängt entscheidend davon ab, wie genau die Codestrich-Lagen, also die Winkel $\alpha_0^+, \alpha_1^\mp, \cdots, \alpha_{m-1}^\mp$ bekannt sind. Da eine präzise Plazierung der Codestriche auf dem Kreis aufwendig ist, ist es vorteilhaft, diese Winkel als zu identifizierende Modellparameter zu betrachten: Dadurch können die Kreis-Fertigungstoleranzen gelockert werden, und es muss nur noch darauf geachtet werden, dass Σ decodierbar bleibt, also die Binärfolge *b* realisiert. Ein weiterer Vorteil der Variabilität der Winkel $\alpha_0^+, \alpha_1^\mp, \cdots, \alpha_{m-1}^\mp$ besteht darin, dass damit der mit der Reduktion der Anzahl Lageparameter von 11 auf $k < 11$ einhergehende Modellfehler teilweise kompensiert werden kann.

Der Strichcode Σ wird in folgender Weise auf den Array *A* abgebildet: In Anlehnung an die klassische Optik wird die von der Diode mit Mittelpunkt $s \in ]-1,1[$ registrierte LichtIntensität $I(s)$ gemäss

$$I(s) = \int_{-\infty}^{\infty} \mathbf{a}(\sigma - s)\cdot I^0(\sigma)\cdot\Sigma(\hbar_1^{-1}(\sigma,\beta;p,q,u,v,x,y))d\sigma \tag{3}$$

modelliert, wobei $I^0 : R \to R_+$ die kontinuierliche Intensitätsverteilung des unbehindert auf dem Array *A* einfallenden Lichtes bezeichnet und $a:R \to R_+$ sowohl das Antwortverhalten der Dioden des Arrays *A* als auch optische Effekte wie Verblurrung, Brechung und Beugung pauschal beschreibt. Der Modellansatz (3), insbesondere die darin postulierte Translationsinvarianz der Dioden-Antwort, ist eine vereinfachende Idealisierung welche die optische Abbildung lediglich approximativ im statistischen Mittel beschreibt. Bezeichnet $\Im \subset [0,m[$ die durch Decodierung bestimmte Menge der Indizes der lichtdurchlässigen Codestriche, welche ganz oder teilweise auf den Array *A* abgebildet werden, so gilt

$$I(s) \overset{(3)}{\underset{(2)}{\approx}} \sum_{i\in\Im} \int_{\hbar(\alpha_i^-,\beta;p,q,u,v,x,y)}^{\hbar(\alpha_i^+,\beta;p,q,u,v,x,y)} \mathbf{a}(s-\sigma)\cdot I^0(\sigma)d\sigma = \sum_{i\in\Im} I^0(\sigma_i)\cdot \int_{s-\hbar(\alpha_i^+,\beta;p,q,u,v,x,y)}^{s-\hbar(\alpha_i^-,\beta;p,q,u,v,x,y)} \mathbf{a}(\sigma)d\sigma \tag{4}$$

Die Näherung in (4) besagt, dass Beiträge zur Dioden-Antwort *I* vernachlässigt werden, wenn sie von Codestrichen stammen, die nicht auf den Array A abgebildet werden, und die Gleichung in (4) ergibt sich aus dem Mittelwertsatz der Integralrechnung àfür passende $\sigma_i \in [\hbar(\alpha_i^-,\beta;p,q,u,v,x,y), \hbar(\alpha_i^+,\beta;p,q,u,v,x,y)]$, $i \in$ .

Welche Funktion $a:R \to R_+$ das Antwortverhalten der Dioden via (4) realitätsnah beschreibt, kann theoretisch oder empirisch untersucht werden; praktische Erwägungen, insbesondere der erforderliche Rechenaufwand, legen eine möglichst einfache, nach allen Variablen stetig differenzierbare analytische Form und kompakten Träger nahe. Ist beispielsweise

$$(5)\qquad \boldsymbol{a}(\sigma;t_-,t_+) := \begin{cases} 0, & t_+ \le |\sigma| \\ \dfrac{(t_+-|\sigma|)^2}{t_+\cdot(t_+-t_-)}, & t_- < |\sigma| < t_+ \\ 1-\dfrac{\sigma^2}{t_-\cdot t_+}, & |\sigma| \le t_- \end{cases} \qquad \text{für } 0 < t_- < t_+ ,$$

so ist $\alpha(\cdot;t_-,t_+):R \to R_+$ ein symmetrischer quadratischer Spline mit Träger $[-t_+,t_+] \subset R$, für den sich die Integrale (4) leicht analytisch berechnen lassen und kubische Splines in *s* mit kompakten Trägern sind, welche lediglich von $t_{\mp}$ und $\hbar(\alpha_i^{\mp},\beta;p,q,u,v,x,y)$ abhängen ; $i \in \lesssim$.

Besteht der Array *A* der detektierenden Komponente aus *n* identischen Dioden, so hat der Mittelpunkt der *j*-ten Diode die Koordinate $s_j=\frac{2j-1}{n}-1$, und (4) suggeriert, die digitale Antwort $\alpha_j \in R_+$ der *j*-ten Diode gemäss

$$(6)\qquad a_j = \sum_{i\in\Im} I_i \cdot \int_{s_j-\hbar(\alpha_i^+,\beta;p,q,u,v,x,y)}^{s_j-\hbar(\alpha_i^-,\beta;p,q,u,v,x,y)} a(\sigma)d\sigma + w_j , \qquad 1 \le j \le n$$

zu modellieren, wobei $w_j \in R$ sämtliche zur Signalbildung beitragenden nicht modellierten Effekte (wie Dunkelrauschen, Diskretisierungsfehler, etc.) symbolisiert. Werden die in (6) auftretenden Grössen in den Vektoren bzw. der Matrix

$$a := \begin{bmatrix} a_1 \\ \vdots \\ a_n \end{bmatrix}, w := \begin{bmatrix} w_1 \\ \vdots \\ w_n \end{bmatrix} \in R^n , \boldsymbol{A} := [\boldsymbol{A}_{ji}] := \begin{bmatrix} \int_{s_j-\hbar(\alpha_i^+,\beta;p,q,u,v,x,y)}^{s_j-\hbar(\alpha_i^-,\beta;p,q,u,v,x,y)} \boldsymbol{a}(\sigma)d\sigma \end{bmatrix} \in R^{n\times|\Im|} , I := \begin{bmatrix} I_{\min(\Im)} \\ \vdots \\ I_{\max(\Im)} \end{bmatrix} \in R^{|\Im|}$$

zusammengefasst, so gilt für den fortan *Signalvektor* genannten Vektor αè $\in R^n$

$$(7)\qquad a \overset{(6)}{=} \boldsymbol{A}(\alpha_\Im^\mp,\beta;p,q,u,v,x,y;t)\cdot I + w ,$$

wobei

$$\alpha_\Im^\mp := \left\{ \alpha_i^\mp \mid i \in \Im \right\}$$

und *t* den Vektor der Parameter bezeichnet, welche $a:R \to R_+$ spezifizieren - etwa im Beispiel (5)

$$t = \begin{bmatrix} t_- \\ t_+ \end{bmatrix} \in R_+^2 .$$

Als letzter Schritt der mathematischen Modellierung des Winkelsensors wird der Vektor $w \in R^n$ in (7) als *Zufallsvektor* modelliert, dessen Wahrscheinlichkeitsverteilung eine Dichte $\boldsymbol{d} : \boldsymbol{R^n} \to \boldsymbol{R_+}$ besitzt. Damit kann die Winkelsensor-Kalibrierung als *statistisches Parameterschätzproblem* formuliert und gelöst werden:

❶ Mit dem unkalibrierten Winkelsensor werden in $N$ unbekannten, aber möglichst uniform über den Kreis verteilten Kreislagen $\beta^1,\cdots,\beta^N$ die Signalvektoren $\alpha^1, \cdots, \alpha^N \in R^n$ registriert.

❷ Jeder Signalvektor $\alpha^J \in R^n$ wird decodiert, d.h. es wird die Menge $\mathfrak{I}^J \subset [0,m[$ der Indizes der lichtdurchlässigen Codestriche ermittelt, die ganz oder teilweise auf den Array $A$ abgebildet werden, $1 \le J \le N$.

❸ Modellgemäss sind die Vektoren

$$(8) \qquad w^J \overset{(7)}{=} a^J - A(\alpha^{\mp}_{\mathfrak{I}^J}, \beta^J; p,q,u,v,x,y;t)\cdot I^J \in \boldsymbol{R}^n, \quad 1 \le J \le N,$$

unabhängig und identisch mit Wahrscheinlichkeitsdichte $d : R^n \to R_+$ verteilt; ihre kumulative Wahrscheinlichkeitsdichte ist also

$$(9) \qquad \prod_{J=1}^{N} \boldsymbol{d}\left(a^J - A(\alpha^{\mp}_{\mathfrak{I}^J}, \beta^J; p,q,u,v,x,y;t)\cdot \boldsymbol{I}^J\right) \in \boldsymbol{R}_+ .$$

❹ Die unbekannten Parameter $\hat{I}^1,\cdots,\hat{I}^N$, $\hat{\beta}^1,\cdots,\beta^N$, $\hat{\alpha}^+_0$, $\hat{\alpha}^{\mp}_1,\cdots,\hat{\alpha}^{\mp}_{m-1}$, $\hat{p},\hat{q},\hat{u},\hat{v},\hat{x},\hat{y},\hat{t}$ und allenfalls weitere, die Wahrscheinlichkeitsdichte $d$ spezifizierende Parameter werden unter Respektierung aller Nebenbedingungen beispielsweise $0 < t_- < t_+$, falls (5) verwendet wird - so bestimmt, dass die Wahrscheinlichkeitsdichte (9) maximalen Wert hat.

Existiert eine Maximalstelle $\hat{I}^1,\cdots,\hat{I}^N$, $\hat{\beta}^1, \cdots, \hat{\beta}^N$, $\hat{\alpha}^{\mp}_0$, $\hat{\alpha}^{\mp}_1, \ldots, \hat{\alpha}^{\mp}_{m-1}$, $\hat{p},\hat{q},\hat{u},\hat{v},\hat{x},\hat{y},\hat{t}$ von (9), so wird sie *Maximum Likelihood (ML-) Schätzwert* und ein sie berechnender Algorithmus *Maximum Likelihood (ML-) Schätzer* für die Parameter $I^1,\cdots,I^N$, $\beta^1,\cdots,\beta^N$, $\alpha^+_0,\alpha^{\mp}_1,\cdots,\alpha^{\mp}_{m-1}$, $p,q,u,v,x,y,t$ genannt. ML-Schätzer sind bewährte Standardwerkzeuge der mathematischen Statistik, und die Optimierung multivariabler Funktionen ist eine Standardaufgabe der numerischen Mathematik, für deren Lösung zuverlässige Algorithmen - gebrauchsfertig in kommerziell erhältlichen Software-Paketen implementiert - zur Verfügung stehen. Eine gemäss den Schritten ❶ - ❹ vorgenommene Winkelsensor-Kalibrierung wird fortan *ML-Kalibrierung* genannt.

Wird zwecks Illustration der Methode angenommen, dass $d : R^n \to R_+$ die Dichte einer Normalverteilung mit Erwartungswert $\bar{w} \in R^n$ und (symmetrischer und positivdefiniter) Kovarianzmatrix $C \in R^{n\times n}$ ist, also

$$(10) \qquad \boldsymbol{d}(w) = \frac{\exp\left(-\frac{(w-\bar{w})^T\cdot C^{-1}\cdot(w-\bar{w})}{2}\right)}{\sqrt{(2\cdot\pi)^n\cdot\det(C)}} = \frac{\det(G)}{(2\cdot\pi)^{\frac{n}{2}}}\cdot\exp\left(-\frac{\left\|G\cdot(w-\bar{w})\right\|_2^2}{2}\right), w \in \boldsymbol{R}^n,$$

wobei $G \in R^{n\times n}$ eine Matrix bezeichnet, für die

$$(11) \qquad G^T \cdot G = C^{-1} \text{ und } \det(G) > 0$$

gilt - beispielsweise die *Inverse des Links-Cholesky-Faktors* der Matrix $C \in R^{n\times n}$ -, so reduziert sich die ML-Schätzung auf die Minimierung von

$$(12) \qquad \frac{1}{2}\cdot\sum_{J=1}^{N}\left\|G\cdot\left(a^J - \bar{w}^J - A(\alpha^{\mp}_{\mathfrak{I}^J}, \beta^J; p,q,u,v,x,y;t)\cdot I^J\right)\right\|_2^2 - N\cdot\log\left(\det(G)\right).$$

Wird sogar angenommen, die Messfehler der Array-Dioden seien signal- und statistisch unabhängig und identisch

normalverteilt, mit unbekanntem Mittelwert $\alpha_0 \in R$ und unbekannter Standardabweichung $\sigma > 0$, so entspricht dies der Wahl

$$(13) \qquad \overline{w} := a_0 \cdot \mathbb{1}_n := a_0 \cdot \begin{bmatrix} 1 \\ \vdots \\ 1 \end{bmatrix} \in R^n \quad \text{und} \quad G := \frac{1}{\sigma} \cdot \text{Diag}(\mathbb{1}_n) \in R^{n \times n},$$

die (12) weiter auf

$$\frac{1}{2 \cdot \sigma^2} \cdot \sum_{J=1}^{N} \left\| a^J - a_0 \cdot \mathbb{1}_n - A(\alpha^{\mp}_{\Im^J}, \beta^J; p, q, u, v, x, y; t) \cdot \mathbf{I}^J \right\|_2^2 + N \cdot n \cdot \log(\sigma)$$

und damit die ML-Kalibrierung auf die Minimierung von (14)

$$\sum_{J=1}^{N} \left\| a^J - a_0 \cdot \mathbb{1}_n - A(\alpha^{\mp}_{\Im^J}, \beta^J; p, q, u, v, x, y; t) \cdot I^J \right\|_2^2$$

reduziert.

Da die Sensorsignale nicht-negative Zahlen sind, ist Normalverteilung eine realitätsferne Modellannahme, die aber den praktischen Vorzug hat, die ML-Kalibrierung auf ein (nichtlineares) quadratisches Ausgleichsproblem - etwa der Gestalt (14) - zurückzuführen, das effizienter gelöst werden kann als ein allgemeines Optimierungsproblem der Gestalt (9).

Die konzeptionelle und prozedurale Einfachheit der ML-Kalibrierung wird zum Preise der aufwendigen und allenfalls schlecht konditionierten Maximierung der Wahrscheinlichkeitsdichte (9) erkauft, bei der aus $N \cdot n$ skalaren Daten

$$k + 2m - 1 + \ell + N + \sum_{J=1}^{N} \left| \Im^J \right|$$

Parameter berechnet werden; $k = 6$ oder $k = 4$, $\ell :=$ Anzahl der zur Spezifikation der Funktionen $a: R \rightarrow R_+$ und $d: R^n \rightarrow R_+$ benötigten Parameter - im Falle (5), (10), (13) $\ell = 3$. Soll jeder Codestrich auf durchschnittlich $M$ Signalvektoren abgebildet werden, so muss

$$N \approx \frac{M \cdot m}{\frac{1}{N} \cdot \sum_{J=1}^{N} \left| \Im^J \right|}$$

gewählt werden. Für die typischen Werte $m=1023$, $n=1024$,

$$\frac{1}{N} \cdot \sum_{J=1}^{N} \left| \Im^J \right| \approx \frac{n}{20}$$

und $M \approx 12$ ergibt dies $N \approx 240$, sodass via Maximierung von (9) aus ca. 250'000 Signalwerten etwa 15'000 Parameter

simultan zu bestimmen sind. Optimierungsprobleme dieser Grössenordnung können nur dann effizient gelöst werden, wenn ihre strukturellen Eigenschaften zur Aufwandreduktion ausgenutzt werden, und diese sind in die Problemlösung "hineinzumodellieren". So ist bei der Spezifikation der Funktion $a:R \to R_+$ - wie in Beispiel (5) - auf kompakten Träger zu achten, damit die in (9) auftretenden Matrizen schwachbesetzt ("sparse") sind. Weiter sollten Randbedingungen wie $I_i^J \geq 0$, $\alpha_i^- < \alpha_i^+$, etc. ignoriert werden; bei guter Datenlage sollten die ML-Schätzwerte diese Bedingungen automatisch erfüllen, und allfällige Verletzungen weisen darauf hin, dass die Optimierung von (9) misslungen ist, oder gewisse Modellierungsansätze modifiziert werden sollten. Falls in (9) die Normalverteilung (10) verwendet wird, kann es lohnend sein, in (12) die Variablen

$$I^J \in R^{|\Im^J|}$$

und $\bar{w}^J \in R^n$ - bzw. $a_0 \in R$ in (14) - zu eliminieren, indem die entsprechenden linearen Ausgleichsprobleme exakt gelöst werden: Dann treten nur noch die Parameter $\beta^1,\cdots,\beta N$, $\alpha_0^+, \alpha_1^\mp, \cdots \alpha_{m-1}^+$, $p,q,u,v,x,y,t$ explizit in Erscheinung, aber ihre funktionale Verknüpfung wird (durch das Auftreten von *Moore-Penrose-Pseudoinversen)* komplexer.

Die Maximierung von (9) erfolgt gemäss gegenwärtigem Stand der Technik mit einem bewährten iterativen Verfahren; diese sind dann effizient, wenn (9) nach allen zu schätzenden Parametern stetig differenzierbar ist, und alle partiellen ersten Ableitungen analytisch berechnet werden können. Da die gemäss (0) definierte Funktion $\hbar$ nach all ihren Argumenten beliebig oft stetig differenzierbar ist, ist lediglich bei der Wahl der Funktionen $a:R \to R_+$ und $d: R^n \to R_+$ auf stetige Differenzierbarkeit zu achten; bei der Wahl (5) und (10) ist sie gewährleistet.

Iterationsverfahren benötigen Startwerte, die zwecks Zuverlässigkeit und Effizienz der Optimierung nahe bei den optimalen, im vorliegenden Fall also ML-Schätzwerten liegen sollten. Für die Parameter $\alpha_+^0, \alpha_1^\mp, \cdots, \alpha_{m-1}^+$ und $p,q,u,v,x,y$ können die Soll-Werte $\hat{\alpha}_i^\mp$, $0 \leq i < m$, und $\hat{p}$, $\hat{q}$, $\hat{u}=\hat{v}=\hat{x}=\hat{y}=0$ verwendet werden, und für die $\boldsymbol{a:R \to R_+}$ und $\boldsymbol{d: R^n \to R_+}$ spezifizierenden Parameter können Startwerte aus separaten Signal-Analysen gewonnen werden. Im Zuge der Decodierung des Signalvektors $\alpha^J \in R^n$, d.h. der Bestimmung der Indexmenge $\Im^J \subset [0,m[$, $1 \leq J \leq N$, wird für $i \in \Im^J$ die Maximalstelle, der Median oder der Schwerpunkt $\hat{s}_i^J \in ]-1,1[$ des vom Codestrich $i$ erzeugten Peaks sowie das Signal $I(\hat{s}_i^J)$ näherungsweise - z.B. durch lineare Interpolation - berechnet; im Einklang mit (1) und (4) werden

$$(15) \qquad \hat{\beta}^J := \frac{1}{|\Im^J|} \cdot \sum_{i \in \Im^J} \hbar_2^{-1}\left(\frac{\hat{\alpha}_i^- + \hat{\alpha}_i^+}{2}, \hat{s}_i^J; \hat{p},\hat{q},\hat{u},\hat{v},\hat{x},\hat{y}\right) \quad \text{und} \quad \hat{I}^J := c \cdot \begin{bmatrix} I(\hat{s}^J_{\min(\Im^J)}) \\ \vdots \\ I(\hat{s}^J_{\max(\Im^J)}) \end{bmatrix} \in R^{|\Im^J|}$$

als Startwerte für $\beta^J$ und $I^J \in R^{|\Im^J|}$ gewählt, wobei $c \in R_+$ ein durch die Spezifikation von $a:R \to R_+$ festgelegter Skalierfaktor ist. Falls die Parameter $I^J \in R^{|\Im^J|}$ wie oben erläutert eliminiert werden, entfällt die Berechnung ihrer Startwerte.

Die Abstützung der Kalibrierung auf ein mathematisches Modell - den Ansatz (7) mit den Funktionen $\hbar$, $a$, $d$ - hat nebst der dadurch erzielten prozeduralen Einfachheit weitere Vorzüge:

1. **Mehrfachsensor:** Die ML-Kalibrierung lässt sich mühelos auf Winkelsensoren mit mehreren Dioden-Arrays ausdehnen: Das zu maximierende Produkt (9) erstreckt sich dann auch noch über alle Arrays, wobei die Parameter $\alpha_0^+, \alpha_1^\mp, \cdots, \alpha_{m-1}^\mp$ allen Signalvektoren gemein sind und die Kreis-Lagewinkel $\beta^1, \cdots, \beta^N$ zweier Arrays sich um einen konstanten Versatz voneinander unterscheiden. Die Winkel-Versatze bezüglich einem ausgezeichneten Array werden mitgeschätzt, und die (aus der Herleitung von Gleichung (0) sich ergebenden) linearen Abhängigkeiten, die zwischen den Parametern $u,v,x,y$ verschiedener Arrays bestehen, können ignoriert oder berücksichtigt werden.

2. **Hybride ML-Kalibrierung:** Falls für einige der Kreis-Lagewinkel $\beta^1,\cdots,\beta^N$, etwa für $\beta^1,\cdots,\beta^{N'}$ Referenzwinkel $\hat{\beta}^1, \cdots, \hat{\beta}^{N'}$ verfügbar sind, $1 \leq N' \leq N$, können sie von der ML-Kalibrierung mitverwendet werden, indem das Modell

$$(16) \qquad \omega^J = \hat{\beta}^J - \beta^J - \beta^0,\ 1 \leq J \leq N',\ \beta^0 \in R \text{ ein Versatz,}$$

zu (8) adjungiert wird. Wie in (7) wird der Vektor

$$\omega := \begin{bmatrix}\omega^1\\ \vdots\\ \omega^{N'}\end{bmatrix} \in R^{N'}$$

als *Zufallsvektor* mit Wahrscheinlichkeitsdichte $d'$: $R^{N'} \to R_+$ modelliert, und anstelle von (9) wird die kumulative Wahrscheinlichkeitsdichte

$$(17) \qquad d'\left(\begin{bmatrix}\hat{\beta}^1-\beta^1-\beta^0\\ \vdots\\ \hat{\beta}^{N'}-\beta^{N'}-\beta^0\end{bmatrix}\right)\cdot\prod_{J=1}^{N} d\left(a^J - A(\alpha^{\mp}_{\mathfrak{J}^J},\beta^J;p,q,u,v,x,y;t)\cdot I^J\right) \in R_+$$

maximiert. Die Erweiterung der hybriden ML-Kalibrierung auf Mehrfachsensoren ist problemlos.

3. **Residuen-Analyse:** Nach erfolgter Kalibrierung können diesog. *Residuenvektoren*

$$(18) \qquad \hat{w}^J \overset{(8)}{:=} a^J - A(\hat{\alpha}^{\mp}_{\mathfrak{J}^J},\hat{\beta}^J;\hat{p},\hat{q},\hat{u},\hat{v},\hat{x},\hat{y};\hat{t})\cdot\hat{I}^J \in R^n \qquad , \quad 1 \le J \le N ,$$

berechnet werden, die modellgemäss Realisierungen von unabhängigen *d*-verteilten Zufallsvektoren sein sollten. Mittels statistischer Testverfahren kann untersucht werden, inwieweit dies zutrifft, woraus sich abschätzen lässt, wie realitätsnah die Modellierung ist und ob sie allenfalls modifiziert werden sollte.

4. **Winkelschätzung:** Die Winkelmessung mit dem kalibrierten Winkelsensor verwendet dasselbe Modell wie die ML-Kalibrierung: Anstelle von (9) wird

$$d\left(a - A(\hat{\alpha}^{\mp}_{\mathfrak{J}},\beta;\hat{p},\hat{q},\hat{u},\hat{v},\hat{x},\hat{y};\hat{t})\cdot I\right) \in R_+$$

minimiert, und der ML-Schätzwert $\hat{\beta}$ für β wird als Winkelmesswert ausgegeben; der ML-Schätzwert $\hat{I}$ für $I$ ist wie bei der Kalibrierung ein irrelevantes Nebenprodukt. Die Berechnung der Startwerte für die Iteration und die Erweiterung auf Mehrfachsensoren ist gleich wie bei der ML-Kalibrierung.

5. **Permanente Selbstkalibrierung:** Der Signalvektor $\alpha \in R^n$ in (19) enthält genügend Information, um nebst β und $I$ auch noch einige der Parameter $p,q,u,v,x,y,t$ zu schätzen. Damit liesse sich eine - mühelos auf Mehrfachsensoren ausdehnbare - permanente Selbstkalibrierung realisieren, die evtl. Temperatur- und Alterungseinflüsse auf die Messgenauigkeit reduzieren würde. Die Schätzung der Parameter $p,q,u,v,x,y,t$ würde verwenden, dass - im Gegensatz zu β und $I$ - Apriori-Information in Form der aktuellsten ML-Schätzwerte $\hat{p}$, $\hat{q}$, $\hat{u}$, $\hat{v}$, $\hat{x}$, $\hat{y}$; $\hat{t}$ vorhanden ist.

Es versteht sich, dass die dargestellte Kalibrierung nur eine von vielen möglichen Ausführungsformen ist und der Fachmann alternative mathematische Modelle oder Realisierungsformen, z.B. unter Verwendung anders geformter Teilsysteme, alternativer Codierungen oder anderer Mittel zur Abbildung und Detektion oder zur Signalverarbeitung, ableiten kann.

## Patentansprüche

1. Verfahren zur Kalibrierung eines Messinstrumentes mit mindestens zwei gegeneinander beweglichen Teilsystemen ( *K*; *M* ) und mit Mitteln (*L*) zur Erzeugung einer Abbildung mindestens eines ersten Teilsystems (*K*) auf mindestens eine detektierende Komponente (*A*) wenigstens eines der Teilsysteme (*K;M*), mit folgenden Schritten, wobei einer oder mehrere der folgenden Schritte mehrfach durchgeführt werden können,

- Erstellen eines die relativen Lagen der Teilsysteme zueinander und mindestens eine Abbildung beschreibenden mathematischen Modells,
- Ableiten von mindestens einem Parametersatz, der Einflussfaktoren auf systematische Messfehler des Messinstrumentes quantifiziert, mit mindestens einem Parameter aus dem mathematischen Modell,
- Erzeugen einer Abbildung von die relative Lage eines Teilsystems bestimmenden Strukturelementen (*S*) mindestens eines ersten Teilsystems (*K*) - vorzugsweise einer auf dem ersten Teilsystem (*K*) angebrachten Markierung - auf dem zweiten Teilsystem (*M*) derart, dass die Abbildung eine Information über die relative Lage der Teilsysteme beinhaltet,
- Umwandeln der Abbildung der Strukturelemente des ersten Teilsystems in Signale durch die detektierende Komponente ( *A* ) ,
- Aufnehmen mindestens eines Signalvektors mit wenigstens einer Komponente, der Informationen über die relative Lage der Teilsysteme ( *K*;*M* ) enthält, aus den Signalen der detektierenden Komponente (*A*),
- Schätzen von Werten des Parametersatzes aus dem mindestens einen Signalvektor,
- Ableiten und Bereitstellen von Korrekturwerten, die systematische Messfehler des Messinstrumentes reduzieren, aus den Werten des Parametersatzes.

**2.** Verfahren nach Anspruch 1,
**dadurch gekennzeichnet, dass**
die Markierung eine Codierung mit der Eigenschaft beinhaltet, dass aus der Abbildung eines Codesegmentes auf der detektierenden Komponente (*A*) das Codesegment auf dem ersten Teilsystem (*K*) eindeutig lokalisiert werden kann.

**3.** Verfahren nach Anspruch 2,
**dadurch gekennzeichnet, dass**
die Codierung einer m-Sequenz entspricht, d.h. einer Sequenz der Länge $m = 2^{\ell}-1$, mit $\ell$ als natürlicher Zahl und der Sequenz als zyklische Binärfolge *b*, bestehend aus $\frac{m-1}{2}$ Nullen und $\frac{m+1}{2}$ Einsen, welche die Eigenschaft hat, dass zu jeder natürlichen Zahl $n<m$ genau eine Teilfolge von *b* bestehend aus $\ell$ aufeinanderfolgenden Ziffern existiert, welche binär *n* darstellt.

**4.** Verfahren nach einem der vorangehenden Ansprüche,
**dadurch gekennzeichnet, dass**
der Parametersatz wenigstens einen der folgenden Parameter enthält

- Drehachse *d* (*d*) des Teilsystems,
- Fläche *K*, in der die Markierung eines Teilsystems liegt, wobei mindestens eines der Teilsysteme eine, insbesondere mindestens teilweise glatte, Form besitzt, die beispielsweise als eine der folgenden Formen ausgebildet ist
  - Scheibe
  - Ring
  - Kugel
  - Zylinder,
- Lage der Markierung, bspw. ein Winkel α (α) zur Beschreibung der Lage eines Codestriches, wenn die Markierung aus einem Code mit Codestrichen besteht, die auf einem Teilsystem mit teilweise ebener Oberfläche, vorzugsweise scheibenförmig, in der Ebene dieser Oberfläche radial angebracht sind, beispielsweise als Folge von alternierend lichtdurchlässigen und lichtundurchlässigen Codestrichen, oder als Folge von Codestrichen mit alternierend unterschiedlichem Reflexionsvermögen,
- Lagewinkel β (β) zur Beschreibung der Drehung eines Teilsystems (*K*) um die Drehachse *d* (*d*) relativ zu

anderen Teilsystemen,

- Lageparameter einer Strahlungsquelle, wenn die Mittel (*L*) zur Abbildung eine oder mehrere Quellen elektromagnetischer Strahlung, insbesondere Lichtquellen, beinhalten,

- Lageparameter des Durchstosspunktes (*D*) der Drehachse *d* (*d*) durch die die Markierung tragende Fläche,

- Lageparameter eines Dioden-Arrays, wenn die detektierende Komponente (*A*) ein oder mehrere Arrays aus lichtempfindlichen Dioden, insbesondere in linearer Anordnung, beinhaltet.

**5.** Verfahren nach Anspruch 4,
**dadurch gekennzeichnet, dass**
ein Abstimmen der Null-Lagen des in der Ebene *K* gemessenen Lagewinkels $\alpha$ ($\alpha$) und des in der Normalebene zur Drehachse *d* (*d*) gemessenen Lagewinkels $\beta$ ($\beta$) so erfolgt, dass im die Abbildung beschreibenden mathematischen Modell der Lagewinkel $\beta$ ($\beta$) nur in einer Differenz mit dem Lagewinkel $\alpha$ ($\alpha$) auftritt.

**6.** Verfahren nach einem der vorangehenden Ansprüche,
**dadurch gekennzeichnet, dass**
der Parametersatz mindestens einen, vorzugsweise dimensionsfreien und/oder zeitinvarianten, Parameter beinhaltet, der eine Verknüpfung von Parametern, insbesondere aus dem mathematischen Modell, darstellt.

**7.** Verfahren nach einem der vorangehenden Ansprüche,
**dadurch gekennzeichnet, dass**
das Verfahren externe Referenzgrössen, die nicht durch das Verfahren bestimmt werden, als Werte für einen oder mehrere Parameter verwendet.

**8.** Verfahren nach einem der vorangehenden Ansprüche,
**dadurch gekennzeichnet, dass**
das Verfahren vor dem Umwandeln der Abbildung von Strukturelementen des ersten Teilsystems *(K)* in Signale als zusätzlichen Schritt mindestens eine weitere Abbildung von die relative Lage eines Teilsystems bestimmenden Strukturelementen (*S*) von einem Teilsystem auf mindestens eines der Teilsysteme, insbesondere vom zweiten Teilsystem (*M*) auf das erste Teilsystem (*K*) - wobei gegebenenfalls mehrere weitere Abbildungen aufeinander folgen - beinhaltet.

**9.** Messinstrument, das mit einem Verfahren nach einem der Ansprüche 1 bis 8 kalibrierbar ist,
mit mindestens zwei gegeneinander beweglichen Teilsystemen (*K*;*M* ) und mit Mitteln (*L*) zur Erzeugung einer Abbildung mindestens eines ersten Teilsystems (*K* ) auf mindestens eine detektierende Komponente (*A*) wenigstens eines der Teilsysteme (*K*;*M* ),
**dadurch gekennzeichnet, dass**

- die Mittel (*L* ) zur Erzeugung einer Abbildung Strukturelemente, die die relative Lage eines Teilsystems bestimmen, - vorzugsweise einer auf dem ersten Teilsystem (*K*) angebrachten Markierung-derart abbilden, dass die Abbildung eine Information über die relative Lage der Teilsysteme beinhaltet, und dass folgende Bauteile vorgesehen sind,
- mindestens eine detektierende Komponente (*A*), die die Abbildung der Strukturelemente (*S*) des ersten Teilsystems (*K*) in Signale umwandelt,
- Mittel zum Aufnehmen mindestens eines Signalvektors mit wenigstens einer Komponente, der Informationen über die relative Lage der Teilsysteme (*K*;*M*) enthält, aus den Signalen der mindestens einen detektierenden Komponente (*A*) ,
- Mittel zum Ableiten und zum Bereitstellen von Korrekturwerten, die systematische Messfehler des Messinstrumentes reduzieren und
- Mittel zum Reduzieren der systematischen Messfehler des Messinstrumentes.

**10.** Messinstrument nach Anspruch 9,
**dadurch gekennzeichnet, dass**
mindestens eines der Teilsysteme (*K;M*) eine rotationssymmetrische Form besitzt, die beispielsweise als eine der folgenden Formen ausgebildet ist

- Scheibe
- Ring
- Kugel
- Zylinder.

**11.** Messinstrument nach einem der Ansprüche 9 oder 10, **dadurch gekennzeichnet, dass** die Mittel (*L*) zur Abbildung eine oder mehrere Quellen elektromagnetischer Strahlung, insbesondere Lichtquellen, beinhalten.

**12.** Messinstrument nach einem der Ansprüche 9 bis 11, **dadurch gekennzeichnet, dass** die Markierung eine Codierung mit der Eigenschaft beinhaltet, dass aus der Abbildung eines Codesegmentes auf der detektierenden Komponente (*A*) das Codesegment auf dem ersten Teilsystem (*K*) eindeutig lokalisiert werden kann.

**13.** Messinstrument nach Anspruch 12, **dadurch gekennzeichnet, dass** die Codierung einer m-Sequenz entspricht, d.h. einer Sequenz der Länge $m = 2^{\ell} - 1$, mit $\ell$ als natürlicher Zahl und der Sequenz als zyklische Binärfolge *b*, bestehend aus $\frac{m-1}{2}$ Nullen und $\frac{m+1}{2}$ Einsen, welche die Eigenschaft hat, dass zu jeder natürlichen Zahl $n < m$ genau eine Teilfolge von *b* bestehend aus $\ell$ aufeinanderfolgenden Ziffern existiert, welche binär *n* darstellt.

**14.** Messinstrument, insbesondere Winkelmessinstrument, nach einem der Ansprüche 9 bis 13, **dadurch gekennzeichnet, dass** die Markierung aus Codestrichen besteht, die auf einem Teilsystem mit teilweise ebener Oberfläche, vorzugsweise scheibenförmig, in der Ebene dieser Oberfläche radial angebracht sind, beispielsweise

- als Folge von alternierend lichtdurchlässigen und lichtundurchlässigen Codestrichen, oder
- als Folge von Codestrichen mit alternierend unterschiedlichem Reflexionsvermögen.

**15.** Messinstrument nach einem der Ansprüche 9 bis 14, **dadurch gekennzeichnet, dass** die detektierende Komponente (*A*) ein oder mehrere Arrays aus lichtempfindlichen Dioden, insbesondere in linearer Anordnung, beinhaltet.

**16.** Messinstrument nach Anspruch 9 bis 15, **dadurch gekennzeichnet, dass** die Mittel zum Ableiten und zum Bereitstellen von Korrekturwerten und/oder die Mittel zum Reduzieren von systematischen Messfehlern eine elektronische Schaltung und/oder einen analogen und/oder digitalen Rechner aufweisen.

**17.** Messinstrument nach Anspruch 9 bis 16, **dadurch gekennzeichnet, dass** die Mittel zum Reduzieren von systematischen Messfehlern eine Vorrichtung zur apparativen Reduzierung der systematischen Messfehler, bspw. piezoelektrische Stellelemente, aufweisen.

**18.** Kalibriervorrichtung zur Durchführung des Verfahrens nach einem der Ansprüche 1 bis 8 für ein Messinstrument, welches mindestens zwei gegeneinander bewegliche Teilsysteme *(K;M)* beinhaltet, **dadurch gekennzeichnet, dass** folgende Bauteile vorhanden sind

- Mittel (*L*) zur Erzeugung einer Abbildung mindestens eines ersten Teilsystems (*K*) des Messinstrumentes auf mindestens eine detektierende Komponente (*A*) der Kalibriervorrichtung, die auf wenigstens einem Teilsystem des Messinstrumentes angebracht ist,

wobei die relative Lage eines Teilsystems bestimmende Strukturelemente (*S*) - vorzugsweise einer auf dem ersten Teilsystem (*K*) angebrachten Markierung-derart abgebildet werden, dass die Abbildung eine Information über die relative Lage der Teilsysteme (*K*;*M*) beinhaltet,

- mindestens eine detektierende Komponente (*A*), die die Abbildung der Strukturelemente (*S*) des ersten Teilsystems (*K*) in Signale umwandelt,

- Mittel zum Aufnehmen mindestens eines Signalvektors mit wenigstens einer Komponente, der Informationen über die relative Lage der Teilsysteme (*K*;*M*) enthält, aus den Signalen der mindestens einen detektierenden Komponente (*A*),

- Mittel zum Ableiten und zum Bereitstellen von Korrekturwerten, die systematische Messfehler des Messinstrumentes reduzieren und

- Mittel zum Reduzieren von systematischen Messfehlern des Messinstrumentes.

**19.** Kalibriervorrichtung nach Anspruch 18,
**dadurch gekennzeichnet, dass**
mindestens eines der Teilsysteme eine rotationssymmetrische Form besitzt, die beispielsweise als eine der folgenden Formen ausgebildet ist

- Scheibe
- Ring
- Kugel
- Zylinder.

**20.** Kalibriervorrichtung nach einem der Ansprüche 18 oder 19,
**dadurch gekennzeichnet, dass**
die Mittel (*L*) zur Erzeugung einer Abbildung eine oder mehrere Quellen elektromagnetischer Strahlung, insbesondere Lichtquellen, beinhalten.

**21.** Kalibriervorrichtung nach einem der Ansprüche 18 bis 20,
**dadurch gekennzeichnet, dass**
die Markierung eine Codierung mit der Eigenschaft beinhaltet, dass aus der Abbildung eines Codesegmentes auf der detektierenden Komponente (*A*) das Codesegment auf dem Teilsystem (*K*) eindeutig lokalisiert werden kann.

**22.** Kalibriervorrichtung nach Anspruch 21,
**dadurch gekennzeichnet, dass**
die Codierung einer m-Sequenz entspricht, d.h. einer Sequenz der Länge $m = 2^{\ell} -1$, mit $\ell$ als natürlicher Zahl und der Sequenz als zyklische Binärfolge *b*, bestehend aus $\frac{m-1}{2}$ Nullen und $\frac{m+1}{2}$ Einsen, welche die Eigenschaft hat, dass zu jeder natürlichen Zahl $n<m$ genau eine Teilfolge von *b* bestehend aus $\ell$ aufeinanderfolgenden Ziffern existiert, welche binär *n* darstellt.

**23.** Kalibriervorrichtung nach einem der Ansprüche 18 bis 22,
**dadurch gekennzeichnet, dass**
die Markierung aus Codestrichen besteht, die auf einem Teilsystem mit teilweise ebener Oberfläche, vorzugsweise scheibenförmig, in der Ebene dieser Oberfläche radial angebracht sind, beispielsweise

- als Folge von alternierend lichtdurchlässigen und lichtundurchlässigen Codestrichen, oder

- als Folge von Codestrichen mit alternierend unterschiedlichem Reflexionsvermögen.

**24.** Kalibriervorrichtung nach einem der Ansprüche 18 bis 23,
**dadurch gekennzeichnet, dass**
die detektierende Komponente (*A*) ein oder mehrere Arrays aus lichtempfindlichen Dioden, insbesondere in linearer Anordnung, beinhaltet.

25. Kalibriervorrichtung nach Anspruch 18 bis 24,
**dadurch gekennzeichnet, dass**
die Mittel zum Ableiten und zum Bereitstellen von Korrekturwerten und/oder die Mittel zum Reduzieren von systematischen Messfehlern eine elektronische Schaltung und/oder einen analogen und/oder digitalen Rechner aufweisen.

26. Kalibriervorrichtung nach Anspruch 18 bis 25,
**dadurch gekennzeichnet, dass**
die Mittel zum Reduzieren von systematischen Messfehlern eine Vorrichtung zur apparativen Reduzierung der systematischen Messfehler, bspw. piezoelektrische Stellelemente, aufweisen.

27. Kalibriervorrichtung nach einem der Ansprüche 18 bis 26,
**dadurch gekennzeichnet, dass** die Kalibriervorrichtung und/oder Bestandteile der Kalibriervorrichtung modular ausgebildet sind.

28. Verwendung eines Verfahrens nach einem der Ansprüche 1 bis 8 zur Kalibrierung mehrerer Messinstrumente
**dadurch gekennzeichnet, dass**
mindestens einer der Schritte

- Erstellen eines mathematischen Modells und

- Ableiten eines Parametersatzes
für mindestens zwei Messinstrumente gemeinsam erfolgt.

29. Computerprogramm-Produkt mit Programmcode, der auf einem maschinenlesbaren Träger gespeichert ist, zur Durchführung der Schritte des Verfahrens nach einem der Ansprüche 1 bis 8,

- Schätzen von Werten des Parametersatzes aus dem mindestens einen Signalvektor,

- Ableiten und Bereitstellen von Korrekturwerten, die systematische Messfehler des Messinstrumentes reduzieren, aus den Werten des Parametersatzes

wenn das Programm in einem Computer ausgeführt wird.

30. Analoges oder digitales Computer-Daten-Signal, verkörpert durch eine elektromagnetische Welle, mit einem Programmcode-Segment zur Durchführung der Schritte des Verfahrens nach einem der Ansprüche 1 bis 8,

- Schätzen von Werten des Parametersatzes aus dem mindestens einen Signalvektor,

- Ableiten und Bereitstellen von Korrekturwerten, die systematische Messfehler des Messinstrumentes reduzieren, aus den Werten des Parametersatzes

wenn der Programmcode in einem Computer ausgeführt wird.

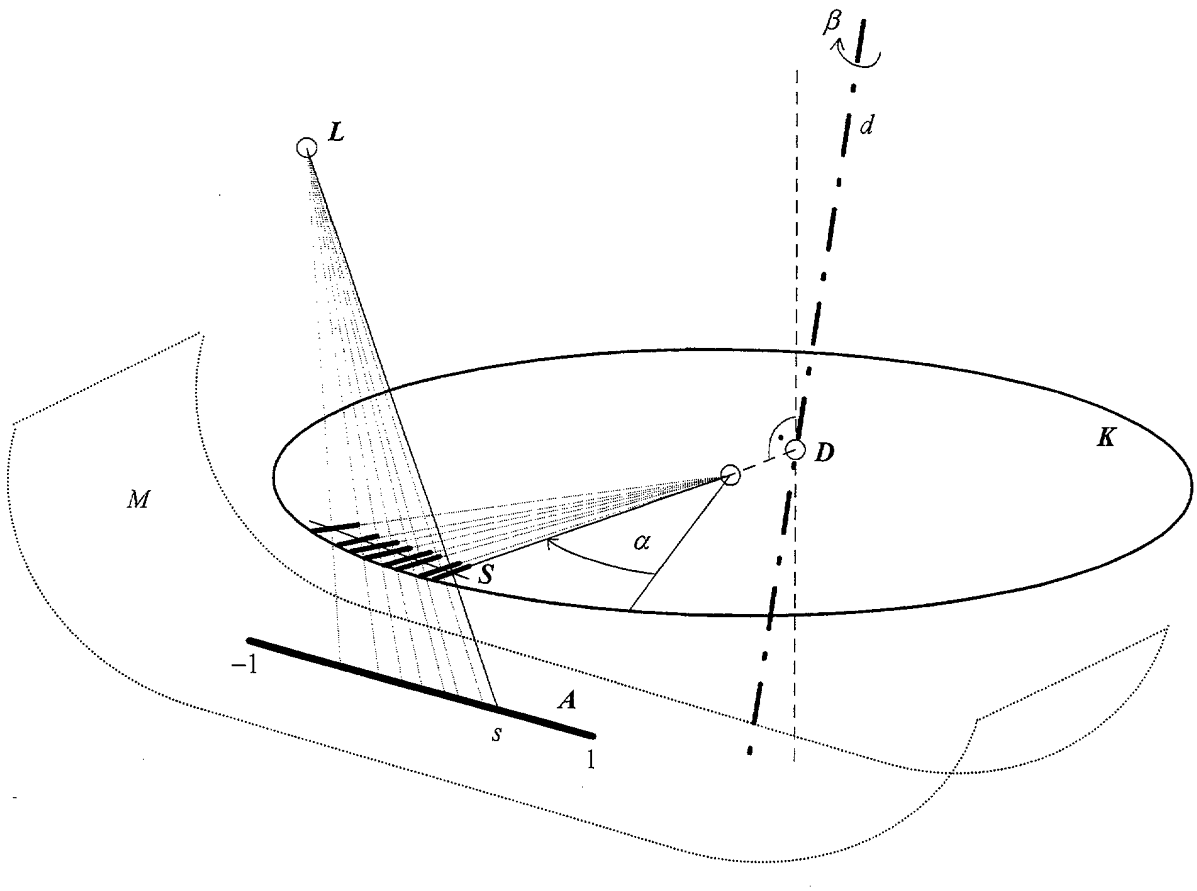


Fig. 1

Europäisches Patentamt

# EUROPÄISCHER RECHERCHENBERICHT

Nummer der Anmeldung
EP 01 10 8218

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 43 31 151 A (BAUMUELLER NUERNBERG GMBH) 23. März 1995 (1995-03-23) * das ganze Dokument * | 1,9 | G01D5/244 G01D5/249 G01D18/00 |
| Y | | 2 | |
| D,Y | CH 658 514 A (WILD HEERBRUGG AG) 14. November 1986 (1986-11-14) * das ganze Dokument * | 2 | |
| A | | 1,9 | |
| A | DE 199 11 822 C (BROWN & SHARPE GMBH) 24. August 2000 (2000-08-24) * das ganze Dokument * | 1,9 | |

RECHERCHIERTE SACHGEBIETE (Int.Cl.7)

G01D
H03M

Der vorliegende Recherchenbericht wurde für alle Patentansprüche erstellt

| Recherchenort | Abschlußdatum der Recherche | Prüfer |
|---|---|---|
| DEN HAAG | 7. September 2001 | Chapple, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 01 10 8218

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2001

| Im Recherchenbericht angeführtes Patentdokument | Datum der Veröffentlichung | Mitglied(er) der Patentfamilie | Datum der Veröffentlichung |
|---|---|---|---|
| DE 4331151 A | 23-03-1995 | AT 192845 T | 15-05-2000 |
| | | DE 59409336 D | 15-06-2000 |
| | | EP 0643285 A | 15-03-1995 |
| | | ES 2145076 T | 01-07-2000 |
| | | JP 7174586 A | 14-07-1995 |
| | | US 5612906 A | 18-03-1997 |
| CH 658514 A | 14-11-1986 | AT 52331 T | 15-05-1990 |
| | | AU 565807 B | 01-10-1987 |
| | | AU 1074983 A | 18-08-1983 |
| | | CA 1213369 A | 28-10-1986 |
| | | DE 3381499 D | 31-05-1990 |
| | | EP 0085951 A | 17-08-1983 |
| | | FR 2521287 A | 12-08-1983 |
| | | JP 1965164 C | 25-08-1995 |
| | | JP 5034606 B | 24-05-1993 |
| | | JP 58147611 A | 02-09-1983 |
| | | US 4668862 A | 26-05-1987 |
| | | ZA 8300480 A | 26-10-1983 |
| DE 19911822 C | 24-08-2000 | KEINE | |

EPO FORM P0461

Für nähere Einzelheiten zu diesem Anhang : siehe Amtsblatt des Europäischen Patentamts, Nr.12/82